**Europäisches Patentamt**

(19) **European Patent Office**

**Office européen des brevets**

(11) Numéro de publication: **0 169 135**

**B1**

# (12) FASCICULE DE BREVET EUROPÉEN

(45) Date de publication du fascicule du brevet:
**06.04.88**

(21) Numéro de dépôt: **85401351.3**

(22) Date de dépôt: **03.07.85**

(51) Int. Cl.⁴: **B 65 G  53/52,** B 65 G  53/50

(54) **Vanne pour répartition pneumatique de matière fluidisable.**

(30) Priorité: **04.07.84  FR 8410616**

(43) Date de publication de la demande:
**22.01.86 Bulletin 86/4**

(45) Mention de la délivrance du brevet:
**06.04.88 Bulletin 88/14**

(84) Etats contractants désignés:
**AT BE CH DE GB IT LI LU NL SE**

(56) Documents cité:
**JP-A-57 145 729**
**US-A-4 203 689**

(73) Titulaire: **CHARBONNAGES DE FRANCE,**
**Etablissement public dit:, Tour Albert 1er 65**
**avenue de Colmar, F-92507 Rueil Malmaison**
**Cédex (FR)**

(72) Inventeur: **Large, Jean- François, 61, rue Carnot,**
**F-60200 Compiegne (FR)**

(74) Mandataire: **Chevallier, Robert Marie Georges,**
**Cabinet BOETTCHER 23, rue La Boétie, F-75008**
**Paris (FR)**

## Description

L'invention a pour objet une vanne dont le rôle est de diriger sélectivement dans une direction déterminée, choisie entre deux directions différentes au moins, et à un débit contrôlé, un flux de matière fluidisable qui parvient à cette vanne par une canalisation d'arrivée.

La vanne de l'invention est particulièrement apte à recevoir par la canalisation d'arrivée une matière finement divisée provenant d'un premier appareil de traitement, à un débit continu qui est constant, en général, mais qui peut aussi être variable. La vanne de l'invention peut également recevoir par intermittence des volumes de matière fragmentée fluidisable qu'elle peut répartir vers des directions différentes.

A cet égard l'état de la technique est illustré par le document US-A 4 203 689 dans lequel est décrit un distributeur de poudre composé d'un compartiment de fluidisation ayant un tube central d'arrivée par le haut de la poudre et, dans sa paroi latérale, au niveau de la surface de la poudre en état de fluidisation, deux ouvertures de sortie par lesquelles la poudre quitte le compartiment. La section de ces ouvertures de sortie est réglable au moyen d'un registre coulissant verticalement le long de la paroi latérale. Ces deux ouvertures sont au même niveau; le déplacement des registres sert à ajuster le débit de la poudre qui sort du compartiment.

A partir de l'état de la technique mentionné ci-dessus, concernent une vanne de répartition sélective entre deux sorties distinctes au moins d'un débit de matière fluidisable venant par une canalisation d'arrivée, comprenant un compartiment principal ayant une paroi latérale et un fond à moyen de fluidisation capable de fluidiser ladite matière fluidisable jusqu'à un niveau supérieur, cette paroi latérale étant munie d'une conduite de trop plein située au niveau supérieure, selon l'invention il existe en plus au moins un compartiment auxiliaire voisin du compartiment principal ayant une paroi latérale et un fond à moyen de fluidisation capable de fluidiser ladite matière fluidisable jusqu'à un niveau déterminé, cette paroi latérale étant munie d'une conduite de trop plein située à un niveau au plus égal au niveau de la conduite de trop plein du compartiment principal, tandis qu'un passage de communication est établi entre le compartiment principal et le ou chaque compartiment auxiliaire à travers leurs parois latérales respectives, à un niveau intermédiaire entre, d'une part le niveau du moyen de fluidisation le plus haut du compartiment principal et du compartiment auxiliaire considéré et, d'autre part le niveau de la conduite de trop plein de ce même compartiment auxiliaire.

De préférence, les conduites de trop plein sont inclinées vers le bas à partir de la paroi latérale de sorte que la matière fluidisée qui les atteint descend par gravité.

En général, les moyens de fluidisation de tous les compartiments sont situés dans un même plan horizontal, et les passages de communication entre le compartiment principal et les compartiments auxiliaires sont situés à un même niveau intermédiaire entre celui des moyens de fluidisation et celui de la conduite de trop plein du compartiment principal.

Cependant, cette disposition relative n'est pas obligatoire. On peut concevoir que le moyen de fluidisation du ou des compartiments auxiliaires ou de certains d'entre eux se trouve à un niveau différent de celui du moyen de fluidisation du compartiment principal.

De préférence, la conduite d'arrivée de la matière fluidisable dans le compartiment principal pénètre dans celui-ci par son sommet et descend intérieurement à ce compartiment pour s'arrêter et s'ouvrir par un orifice situé à un niveau supérieur à celui du moyen de fluidisation. De façon avantageuse, la partie extrême inférieure de cette conduite d'arrivée plonge constamment dans le volume de matière fluidisable, de sorte que l'on obtient ainsi un isolement pneumatique entre le premier appareil de traitement d'où provient la matière fluidisable et les appareils secondaires où cette matière est dirigée à sa sortie de la vanne à partir du ou des compartiments.

Dans le cas où on ne cherche pas cet effet d'isolement pneumatique, il n'est pas nécessaire que la conduite d'arrivée descende du haut vers le bas dans le compartiment principal; la matière peut être véhiculée jusqu'à ce dernier et y être introduite par tout moyen approprié. De préférence, la conduite d'arrivée de la matière fluidisable débouche dans le compartiment principal en-dessous du niveau du passage de communication quand on souhaite favoriser le mélange des solides dans le compartiment principal.

On donnera maintenant, sans intention limitative et sans exclure aucune variante, une description de deux variantes de réalisation. On se reportera au dessin annexé dans lequel:
- la figure 1 est une vue générale schématique d'une vanne conforme à l'invention,
- la figure 2 est une vue générale schématique d'une vanne conforme à l'invention, utilisée en combinaison avec un échangeur de chaleur à lit fluidisé.

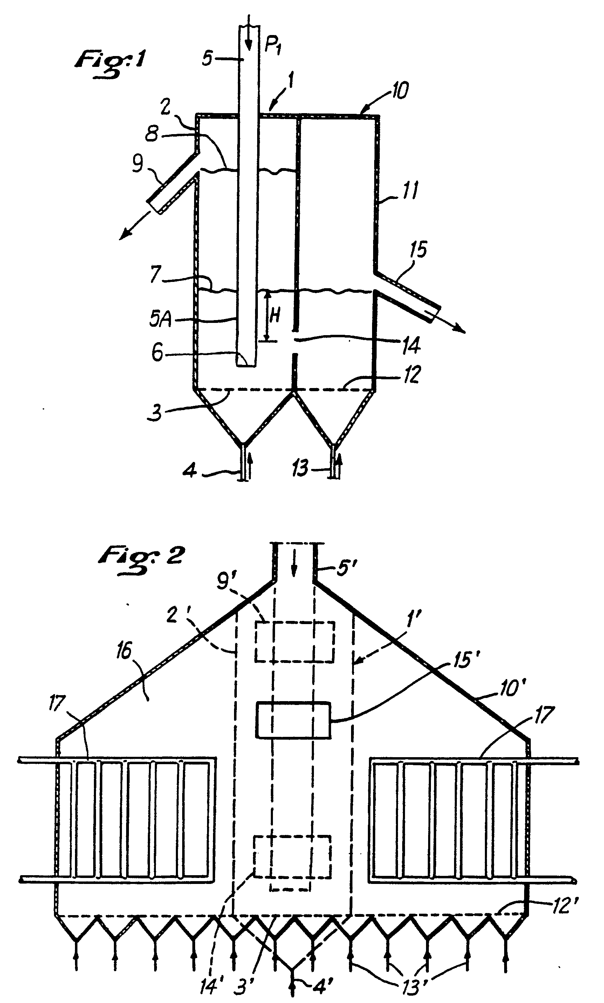

En se reportant d'abord à la figure 1, on voit un compartiment principal 1, allongé en sens vertical, qui est généralement un compartiment central, ayant une paroi latérale 2 et un fond 3. Ce dernier est constitué ici par une grille de fluidisation à travers laquelle passe du gaz de fluidisation arrivant par un tube 4 de gaz de fluidisation. Tout autre moyen de fluidisation, par exemple un faisceau de tubes perforés pour la sortie du gaz de fluidisation, pourrait être utilisé.

A ce compartiment principal 1 aboutit une canalisation d'arrivée 5 qui descend à l'intérieur pour se terminer par un orifice 6 au-dessus du fond 3. Par cette canalisation 5, de la matière en particules convenables pour être fluidisées, arrive dans le compartiment principal 1. La partie extrême inférieure 5A de la canalisation d'arrivée 5 plonge dans le volume de matière fluidisable jusqu'à un niveau inférieur au niveau 7. A l'état fluidisé, cette matière occupe un volume qui atteint un niveau supérieur 8. A ce niveau, une conduite de trop plein 9 s'étend à partir de la paroi latérale 2 et descend obliquement vers le bas pour constituer une première sortie de la vanne.

Au moins un compartiment auxiliaire 10 est disposé à proximité du compartiment principal 1; de préférence, il lui est accolé par sa paroi latérale 11. Il est allongé aussi en sens vertical et il a un fond 12 constitué par une grille de fluidisation, ou par un moyen équivalent, alimentée en gaz de fluidisation par un tube 13. Un passage de communication 14 est ménagé dans les parois latérales accolées 2 et 11, à un niveau intermédiaire entre le niveau de la conduite de trop plein 9 du compartiment principal 1 et le niveau des grilles de fluidisation 3 et 12 qui sont, dans cet exemple, dans un même plan horizontal. Quand les compartiments principal 1 et auxiliaire 10 sont accolés, le passage de communication 14 est réduit à une ouverture commune. Les mêmes compartiments 1 et 10 pourraient être espacés et le passage comprendrait alors une gaine reliant les deux ouvertures ménagées dans les parois latérales 2 et 11. L'espacement de ces dernières est limité à une valeur faible comme il apparaîtra plus loin.

A partir de la paroi latérale 11 du compartiment auxiliaire 10 s'étend obliquement vers le bas une conduite de trop plein 15 qui constitue une seconde sortie de la vanne. Cette conduite 15 est située à un niveau quelconque choisi à partir du niveau du passage de communication 14 jusqu'au niveau de la conduite de trop plein 9 du compartiment principal 1. Bien entendu, elle se trouve à un niveau qui est, au plus haut, celui que peut atteindre la matière fluidisée dans le compartiment auxiliaire 10.

La figure 1 ne montre qu'un seul compartiment auxiliaire 10. Il peut en exister plusieurs disposés autour du compartiment principal 1, chacun ayant un passage de communication avec ce dernier. Les conduites de trop plein des compartiments auxiliaires peuvent se trouver dans un même plan horizontal, mais ce n'est pas obligatoire; dans chaque compartiment auxiliaire 10, le tube de trop plein 15 est placé au-dessus du niveau du passage de communication 14 de ce même compartiment auxiliaire en un point quelconque qui peut atteindre le niveau de la conduite de trop plein 9 du compartiment principal 1. Les passages de communication 14 sont eux-mêmes de préférence dans un même plan horizontal, mais, en fait, il suffit que chaque passage de communication 14 se trouve à un niveau quelconque entre celui des moyens de fluidisation 3, 12 et celui de la conduite de trop plein 9 du compartiment principal 1.

La vanne de l'invention fonctionne de la façon suivante.

Quand le compartiment principal 1 contient de la matière fluidisable et que celle-ci est mise à l'état fluidisé, son niveau atteint le niveau supérieur 8 et rencontre la conduite de trop plein 9 par lequel elle s'écoule, Si la matière provient par la conduite d'arrivée d'un premier appareil où règne une pression $P_1$ supérieure à la pression $P_2$ qui règne dans un second appareil où aboutit la conduite de trop plein 9, il est souhaitable que le tube d'arrivée 5 plonge en permanence dans la matière fluidisable sur une hauteur H telle que $P_1 - P_2 = d\,g\,H$, d étant la densité de cette matière à l'état fluidisé. Ainsi, on réalise un isolement pneumatique entre les deux appareils.

En l'absence de mise en fluidisation du ou des compartimonts 10, la matière ne fait que traverser le compartiment 1 en venant de la conduite d'arrivée 5 et en débordant par la conduite de trop plein 9. Le ou les compartiments auxiliaires 10 contiennent alors de la matière à l'état dense qui obture les passages de communication 14. Si nécessaire, on peut prévoir des chicanes dans ces passages pour empêcher que le gaz de fluidisation du compartiment principal 1 pénètre dans les compartiments auxiliaires 10. L'espacement des compartiments, déjà envisagé plus haut, a un effet analogue à celui des chicanes.

Quand le moyen de fluidisation 12 d'un compartiment auxiliaire 10 est mis en service, la matière contenue dans ce dernier atteint la conduite de trop plein 15 par lequel elle s'écoule et elle est remplacée par de la matière qui provient du compartiment principal 1. Le niveau s'établit dans les deux compartiments 1 et 10 en service au niveau de la conduite de trop plein 15 qui est la plus basse. La matière s'écoule alors dans la direction de cette dernière.

Dans le cas où la ou les conduites de trop plein 15 des compartiments auxiliaires 10 seraient au même niveau que la conduite de trop plein 9 du compartiment principal, la vanne permettrait de réaliser à volonté des écoulements égaux ou différents de matière fluidisable dans des directions différentes, sans moyen mécanique agissant sur cette matière, à condition qu'un débit suffisant arrive par la conduite d'arrivée 5, ce qui peut s'obtenir, entre autres, par l'emploi de plusieurs conduites d'arrivée 5 aboutissant au compartiment principal 1.

L'alimentation convenable en matière fluidisée des compartiments auxiliaires à partir du compartiment principal, à travers les passages de communication 14, impose à l'espacement que l'on peut prévoir entre les compartiments une limite que l'expérience montre facilement; l'emploi de compartiments accolés ayant avec le compartiment principal une paroi commune dans laquelle sont pratiqués les passages de communication, est la disposition préférée.

Il existe généralement plusieurs compartiments auxiliaires 10 de sorte qu'en les mettant en service sélectivement on dirige la matière sélectivement dans l'une quelconque des directions de leurs conduites de trop plein respectives, sans utiliser aucun moyen mécanique mobile en contact avec la matière fluidisée.

On peut aussi remplir le compartiment central 1 par intermittence, à l'aide de charges séparées, par la conduite d'arrivée 1 ou par plusieurs conduites d'arrivée distinctes, éventuellement on mélange ces charges de manière homogène par fluidisation à l'intérieur du compartiment principal 1, puis on les envoie en totalité ou par fractions dans une ou plusieurs directions en mettant en service sélectivement les compartiments auxiliaires convenables.

De cette façon, la vanne de l'invention permet d'alimenter séquentiellement plusieurs appareils de réception à l'aide d'une matière provenant d'un silo de stockage ou d'un réacteur, tout en réalisant l'isolement pneumatique de ce dernier, vis-à-vis des appareils récepteurs.

La vanne de l'invention s'utilise aussi avantageusement dans un circuit de circulation ou de recirculation d'une matière fluidisée, soit pour en extraire, soit pour y ajouter périodiquement un volume déterminé de matière.

La figure 2 se rapporte à une variante de réalisation pour la description de laquelle on utilisera les mêmes références numériques affectées de l'indice'.

Le compartiment principal 1', représenté en trait interrompu, est entouré par un compartiment auxiliaire 10' qui a donc un volume utile annulaire 16 autour du compartiment principal 1'. Les deux compartiments 1' et 10' ont une paroi supérieure tronconique qui se termine à sa rencontre avec la conduite d'arrivée 5', l'ensemble ayant une disposition générale concentrique. A leur partie inférieure, les deux compartiments 1' et 10' se terminent par un même fond constitué par une même grille de fluidisation mais dans laquelle on distingue une partie centrale 3' avec son tube 4' de gaz de fluidisation pour le compartiment principal 1' et une partie annulaire 12' avec ses tubes 13' de gaz de fluidisation pour le compartiment auxiliaire 10'.

Dans la paroi latérale 2' du compartiment central sont prévus, d'une part un passage de communication 14' qui s'ouvre dans les deux compartiments 1' et 10', d'autre part le départ de la conduite de trop plein 9' qui traverse radialement le compartiment auxiliaire 10'. Ce dernier est muni aussi de sa conduite de trop plein 15'.

Le compartiment auxiliaire 10' a un diamètre beaucoup plus grand que celui du compartiment principal 1'; il contient dans son volume annulaire 16 des faisceaux tubulaires 17 d'un échangeur de chaleur. Pendant le fonctionnement, ces faisceaux 17 sont totalement noyés dans la matière fluidisée du fait qu'ils sont disposés en-dessous du niveau de la conduite de trop plein 15'.

Pendant le fonctionnement du compartiment principal 1' seul, la matière ne fait que le parcourir pour en sortir par sa conduite de trop plein 9'. Quand on met en service le compartiment auxiliaire 10' la matière fluidisée y entre par le passage de communication 14' et en sort par la conduite de trop plein 15'. Un échange de chaleur s'établit alors entre cette matière fluidisée et le fluide que l'on peut faire circuler dans les faisceaux tubulaires 17. De préférence, la grille de fluidisation 13' est du type connu à mise en service modulée, ce qui permet de régler l'échange de chaleur qui se produit.

La conduite d'arrivée 5' descend à l'intérieur du compartiment principal 1' pour réaliser 1' isolement pneumatique expliquée plus haut. Dans cette seconde variante, la disposition concentrique des compartiments peut être remplacée par une autre disposition si on le souhaite et les faisceaux 17 peuvent être constitués selon toute configuration désirée.

Les compartiments peuvent être fermés complètement à leur partie supérieure, sauf pour l'éntrée de la conduite d'arrivée 5 de la matière fluidisable, le gaz de fluidisation s'échappant par les conduites de trop plein.

## Revendications

1. Vanne de répartition sélective entre deux sorties distinctes au moins d'un débit de matière fluidisable venant par une canalisation d'arrivée (5), comprenant un compartiment principal (1) ayant une paroi latérale (2) et un fond à moyen de fluidisation (3) capable de fluidiser ladite matière fluidisable jusqu'à un niveau supérieur (8), cette paroi latérale (2) étant munie d'une conduite de trop plein (9) située au niveau supérieur (8), caractérisée en ce qu'elle comprend en plus au moins un compartiment auxiliaire (10) voisin du compartiment principal (1) ayant une paroi latérale (11) et un fond à moyen de fluidisation (12) capable de fluidiser ladite matière fluidisable jusqu'à un niveau determiné, cette paroi latérale (11) étant munie d'une conduite de trop plein (15) située à un niveau au plus égal au niveau de la conduite de trop plein (9) du compartiment principal (1), tandis qu'un passage de communication (14) est établi entre le compartiment principal (1) et le ou chaque compartiment auxiliaire (10) à travers leurs parois latérales (2, 11) respectives, à un niveau intermédiaire entre, d'une part le niveau du moyen de fluidisation (3, 12) le plus haut du compartiment principal (1) et du compartiment auxiliaire (10) considéré, et d'autre part le niveau de la conduite de trop plein (15) de ce même compartiment auxiliaire (10).

2. Vanne selon la revendication 1, caractérisée en ce que plusieurs compartiments auxiliaires (10) sont disposés autour d'un compartiment principal (1) et sont réunis chacun individuellement à ce dernier par un passage de communication respectif.

3. Vanne selon l'une quelconque des revendications 1, 2, caractérisée en ce que les fonds à moyen de fluidisation de tous les compartiments (1, 10) sont situés dans un même plan horizontal.

4. Vanne selon la revendication 1, caractérisée en ce que la canalisation d'arrivée (5) pénètre à l'intérieur du compartiment principal (1) et se termine par une partie extrême inférieure (5A) qui plonge du haut vers le bas dans la matière fluidisée sur une hauteur (H) suffisante à assurer un isolement pneumatique entre cette canalisation d'arrivée (5) et la conduite de trop plein (9).

5. Vanne selon la revendication 1, caractérisée en ce que le compartiment principal (1) est équipé de plusieurs canalisations d'arrivée (5).

6. Vanne selon la revendication 2, caractérisée en ce que le ou les compartiments auxiliaires (10) sont accolés au compartiment principal (1) avec une paroi commune et les passages de communication (14) sont des ouvertures ménagées dans ladite paroi commune.

7. Vanne selon la revendication 2, caractérisée en ce que le ou les compartiments auxiliaires (10) sont espacés du compartiment principal (1) et les passages de communication (14) comprennent une gaine qui réunit des ouvertures ménagées dans les parois respectives du compartiment principal (1) et de chacun des compartiments auxiliaires (10).

8. Vanne selon la revendication 1, caractérisée en ce qu'elle comprend un seul compartiment auxiliaire contient dans son volume annulaire au moins un faisceau tubulaire (17) d'un échangeur de chaleur.

9. Vanne selon la revendication 6, caractérisée en ce que le compartiment auxiliaire (10') et le compartiment principal (1') sont disposés concentriquement à la canalisation d'arrivée (5') de la matière fluidisable.

**Patentansprüche**

1. Ventil zur selektiven Verteilung zwischen zwei unterschiedlichen Ausgängen wenigstens eines Durchsatzes fluidisierbaren Materials, welches über eine Zugangsleitung (5) ankommt, mit einer Hauptkammer (1), mit einer seitlichen Wandung (2) und einem Boden mit Fluidisierungsmittel (3), der in der Lage ist, dieses fluidisierbare Material bis auf ein oberes Niveau (8) zu fluidisieren, wobei diese seitliche Wandung (2) versehen ist mit einer auf einem höheren Niveau (8) angeordneten Überlaufleitung, dadurch gekennzeichnet, daß es darüberhinaus wenigstens eine Hilfskammer (10) benachbart der Hauptkammer (1) umfasst, die über eine seitliche Wandung (11) und einen Boden mit Fluidisierungseinrichtung (12) verfügt, die in der Lage ist, dieses fluidisierbare Material bis auf ein bestimmtes Niveau zu fluidisieren, wobei diese seitliche Wandung (11) mit einer Überlaufleitung (15) ausgestattet ist, die auf einem Niveau angeordnet ist, welches höchstens gleich dem Niveau der Überlaufleitung (9) der Hauptkammer (1) ist, während ein Verbindungsdurchlaß (14) zwischen der Hauptkammer (1) und der oder jeder Hilfskammer (10) quer durch ihre jeweiligen Seitenwandungen (2, 11) auf einem Zwischenniveau hergestellt ist, das sich einerseits zwischen dem höchsten Niveau der Fluidisierungseinrichtung (3, 12) der Hauptkammer (1) und der betrachteten Hilfskammer (10) und andererseits dem Niveau der Überlaufleitung (15) dieser gleichen Hilfskammer (10) befindet.

2. Ventil nach Anspruch 1, dadurch gekennzeichnet, daß mehrere Hilfskammern (10) um eine Hauptkammer (1) herum angeordnet und je einzeln mit letzterer über einen jeweiligen Verbindungsdurchlaß vereinigt sind.

3. Ventil nach einem der Ansprüche 1, 2, dadurch gekennzeichnet, daß die Böden mit Fluidisierungseinrichtung sämtlicher Kammern (1, 10) in ein und der gleichen Horizontalebene angeordnet sind.

4. Ventil nach Anspruch 1, dadurch gekennzeichnet, daß die Zugangsleitung (5) in das Innere der Hauptkammer (1) eintritt und in einem äussersten unteren Teil (5A) endet, der von oben nach unten in das fluidisierte Material über eine Höhe (H) taucht, die ausreicht, um eine pneumatische Isolierung zwischen dieser Eintritts- oder Zugangsleitung (5) und der Überlaufleitung (9) sicherzustellen.

5. Ventil nach Anspruch 1, dadurch gekennzeichnet, daß die Hauptkammer (1) mit mehreren Zugangsleitungen (5) ausgestattet ist.

6. Ventil nach Anspruch 2, dadurch gekennzeichnet, daß die Hilfskammer (10) an der Hauptkammer (1) vermittels einer gemeinsamen Wandung angebracht sind, und daß die Verbindungsdurchlässe (14) in dieser gemeinsamen Wand ausgesparte Öffnungen sind.

7. Ventil nach Anspruch 2, dadurch gekennzeichnet, daß die Hilfskammern (10) unter Abstand zur Hauptkammer (1) angeordnet sind und daß die Verbindungsdurchlässe (14) eine Hülle umfassen, welche Öffnungen vereinigt, welche in den jeweiligen Wandungen der Hauptkammer (1) und jeder der Hilfskammern (10) ausgespart sind.

8. Ventil nach Anspruch 1, dadurch gekennzeichnet, daß es eine einzige Hilfskammer (10') umfasst, welche die Hauptkammer (1') umschliesst und die in ihrem Ringvolumen wenigstens ein Wärmeaustauscherrohrbündel (17) enthält.

9. Ventil nach Anspruch 6, dadurch gekennzeichnet, daß die Hilfskammer (10') und die Hauptkammer (1') konzentrisch zur Zuführungsleitung (5') für das fluidisierbare Material angeordnet sind.

## Claims

1. A distributor valve selective between at least two distinct outlets for a delivery of fluidizable matter coming through inlet pipework (5), comprising a main compartment (1) having a sidewall (2) and a bottom having fluidization means (3) capable of fluidizing the said fluizable matter as far as an upper level (8), the said sidewall (2) being equipped with an overfull duct (9) situated at the upper level (8), characterized in that it comprises in addition at least one auxiliary compartment (10) near the main compartment (1) and having a sidewall (11) and a bottom having fluidization means (12) capable of fluidizing the said fluidizable matter up to a certain level, the said sidewall (11) being equipped with an overfull duct (15) situated at a level at most equal to the level of the overfull duct (9) from the main compartment (1), whilst a communicating passage (14) is established between the main compartment (1) and the or each auxiliary compartment (10) through their respective sidewalls (2, 11) at a level intermediate between firstly the level of the fluidization means (3, 12) in the main compartment (1) or in the auxiliary compartment (10) in question, whichever is the higher, and secondly the level of the overfull duct (15) from this same auxiliary compartment (10).

2. A valve as in Claim 1, characterized in that a number of auxiliary compartments (10) are arranged round a main compartment (1) and are joined each individually to the latter through a respective commuicating passage.

3. A valve as in either of the Claims 1, 2, characterized in that the bottoms having fluidization means, of all the compartments (1, 10), are situated in one and the same horizontal plane.

4. A valve as in Claim 1, characterized in that the inlet pipework (5) penetrates inside the main compartment (1) and terminates in a bottom end portion (5A) which dips down from the top into the fluidized matter through a depth (H) sufficient to ensure pneumatic isolation between the said inlet pipework (5) and the overfull duct (9).

5. A valve as in Claim 1, characterized in that the main compartment (1) is equipped with pipework (5) for a number of inlets.

6. A valve as in Claim 2, characterized in that the auxiliary compartment or compartments (10) are coupled to the main compartment (1) by a common wall and the communicating passages (14) are openings cut in the said common wall.

7. A valve as in Claim 2, characterized in that the auxiliary compartment or compartments (10) are spaced away from the main compartment (1) and the communicating passages (14) comprise shafts which join openings cut in the respective walls of the main compartment (1) and of each of the auxiliary compartments (10).

8. A valve as in Claim 1, characterized in that it comprises only one auxiliary compartment (10') which surrounds the main compartment (1') and which contains in its annular volume at least one bundle of tubes (17) of a heat-exchanger.

9. A valve as in Claim 6, characterized in that the auxiliary compartment (10') and the main compartment (1') are arranged concentrically about the inlet pipework (5') for the fluidizable matter.

0 169 135

*Fig. 1*

*Fig. 2*

1